# EUROPEAN PATENT SPECIFICATION

(11) **EP 3 465 196 B1**
(45) Date of publication and mention of the grant of the patent: **01.05.2024**
(21) Application number: 17728137.5
(22) Date of filing: 31.05.2017
(51) Int. Cl.: G01N 29/04, G01N 29/22, G01N 29/26, G01N 29/28, G01N 29/30

(54) **METHOD FOR ULTRASONIC TESTING OF ELONGATE HOLLOW PROFILES**
VERFAHREN ZUR ULTRASCHALLPRÜFUNG VON LÄNGLICHEN HOHLPROFILEN
PROCÉDÉ D'ESSAI PAR ULTRASONS DE PROFILÉS CREUX ALLONGÉS

(30) Priority: 31.05.2016 DE 102016110044
(43) Date of publication of application: 10.04.2019
(73) Proprietor: voestalpine Tubulars GmbH & Co. KG, 8652 Kindberg-Aumühl (AT)
(72) Inventor: WELTGEN, Stefan, 47058 Duisburg (DE); PETERS, Robert, 47665 Sonsbeck (DE); DELHAES, Christof, 40822 Mettmann (DE); NITSCHE, Stefan, 45475 Mülheim (DE); MICHEL, Raphael, 59300 Valenciennes (FR)
(74) Representative: Moser Götze & Partner Patentanwälte mbB
(86) International application number: PCT/EP2017/063209
(87) International publication number: WO 2017/207661

(56) References cited:
- US-A1- 2011 138 919
- US-A1- 2013 047 697
- US-A1- 2015 168 355
- US-B1- 6 182 494
- US-B1- 6 415 644

## Description

The invention relates to a method for ultrasonic testing of elongate hollow profiles, in which a probe provided with piezoelectric transducers is used in a phased array technique.

It is generally known that an ultrasonic probe in a phased array design is provided with a multiplicity of piezoelectric individual transducers, e.g. sixteen or more. The length of the individual transducers, which can be activated to the maximum extent in the probe, including the gaps between two individual transducers is also defined as transducer ruler length. For financial reasons, such probes comprising a multiplicity of transducers are advantageously used in test bodies by reason of their increased testing coverage, said test bodies having to be tested over the entire surface and length.

The material used for the hollow profiles to be tested includes essentially all ultrasound-conducting materials, such as metals and synthetic materials. In particular, hollow profiles consisting of metal, e.g. steel, are considered hereinafter. Hollow profiles consisting of steel are used e.g. as structural pipes in the construction industry or in agricultural machine manufacture.

The hollow profiles produced in a factory can be up to 15 m in length and are cut to length according to customer requirement. Angled hollow profiles in terms of the present invention are characterized by a cross-section which can be triangular, rectangular, square or polygonal, wherein the hollow profiles can be produced e.g. from a welded or hot-rolled seamless round pipe by hot-drawing, cold-drawing or from a metal sheet which is correspondingly bent and welded at the joining edges. In cross-section, these hollow profiles each comprise straight regions in the profile limbs, said regions having a specific edge length, as well as radius regions in the transition of the bent straight profile limbs. The edge radii which are produced e.g. during hot-drawing or bending and which can be more or less large depending upon the production method, wall thickness of the hollow profile and material are typical of such hollow profiles. Typical radii in hot-rolled seamless hollow profiles range e.g. between 1 x wall thickness and 3 x wall thickness, wherein typical wall thicknesses are in the range of 5 to 25 mm.

In general, the ultrasonic testing of pipes has been known and established for a long time. Ultrasonic tests are used in order to detect any possible discontinuities in workpieces, such as e.g. laminar imperfections, cracks, notches, scrap marks or pores in the pipe wall or weld seam, as part of the production process. Furthermore, the ultrasonic testing is also used for checking the dimensional stability of pipes, such as e.g. the wall thickness.

In connection with a square billet German patent application DE 33 46 791 A1 describes an ultrasonic testing device in a phased-array technique. A probe of the ultrasonic testing device is arranged in a determined angle to a surface of the square billet. Also, German patent application DE 10 2012 016 607 A1 deals with an ultrasound testing system for defects of square bar steel. Several parallel linear grooves in a surface of the square bar steel are used to conduct a calibration of the system. Further, patent application US 2015/0122029 A1 uses phased-array-technique with piezoelectric elements for ultrasonic testing. The ultrasonic sensor includes a transmission sensor on one side of the solid testing element and a reception sensor on the opposite side of the solid testing element, so that the solid testing element is positioned between those two sensors.

In the case of hollow profiles, it is also important to detect possible discontinuities which can appear in particular as longitudinal defects on the inner and outer surface of the profile limbs and also in the region of the radii. Since the radius regions are subject to greater stresses during the production of the hollow profile, they are more prone to having defects.

During the ultrasonic testing, e.g. according to the pulse-echo method using piezoelectric sound converters, ultrasonic pulses are generated which are introduced into the workpiece via a coupling medium (water or oil). If the ultrasonic pulse generated by an ultrasonic transducer strikes an obstacle, such as e.g. pores or cracks, the original propagation of the ultrasonic signal is influenced at this location by reflection or diffraction. In this manner, the sound beam can propagate in the workpiece such that sound portions return to the intromission location and can then be detected by the same or another ultrasonic converter. In many cases, the ultrasonic converter used for generating the ultrasonic pulse is identical to the ultrasonic converter used for detection purposes.

During the ultrasonic testing, a distinction can be made between direct coupling and indirect coupling. In the case of direct coupling using a probe having a single transducer or a plurality of transducers in a phased-array technique, it is important that the probe lies in a planar manner on the test body surface and that no trapped air bubbles are present in the coupling agent, so as not to cause any measuring errors or measuring inaccuracies. Typically, the coupling agent is applied prior to testing in a thin film onto the surface to be tested and the probe is placed on the test body surface thus wetted. It is also possible to couple the probe, via a solid body as an intermediate piece, to the workpiece provided with coupling agent, in order to permit e.g. angle intromissions. It is also possible to make adjustments to the respective contour of the test body using such an intermediate piece which is also referred to as a lead wedge and can consist e.g. of synthetic material. However, this type of testing is wholly unsuitable for automated testing of the surface of elongate and angled hollow profiles in a synchronised production operation. In addition to the direct coupling of the probe to the test body surface, there is also indirect coupling of the probe via a coupling agent flow length produced within an ultrasonic testing device, i.e. via a liquid column which can be several mm or cm depending upon the testing assignment.

Such an ultrasonic probe is known e.g. from German patent document DE 603 20 365 T2, in which the probe is arranged within a probe cavity, which is filled with a coupling liquid, and having a defined coupling agent flow length. The probe cavity is defined by a tyre-shaped coupling element which consists of soft rubber and is mounted so as to be able to rotate about the probe. As a result, the ultrasonic probe can roll on the workpiece surface via the coupling element.

Furthermore, the so-called immersion technique is known, in which the probe and the surface of the test body to be tested are immersed into a water bath as shown in patent application US 2010/0212430 A1 where a bar material with rectangular cross-section is tested. Immersion technique testing is also used e.g. for automated testing on round pipes comprising rough surfaces which do not permit direct coupling of the probe to the surface of the test body.

During the ultrasonic testing, in addition to the straight or planar regions in the profile limbs of the hollow profile, essentially also the inner and outer surfaces of the radius regions of the hollow profile can be tested for longitudinal defects, if a plurality of individual probes is arranged and guided at fixed angles consecutively or simultaneously corresponding to the hollow profile geometry. For different dimensions of the hollow profiles, the probes would then each have to be rearranged according to the changed geometric conditions. However, this is very complex and thus not cost-effective and not practical for an automated manufacturing sequence.

When testing hollow profiles for longitudinal defects, a different intromission angle must also be adjusted in each case for internal defect and external defect testing in dependence upon the respective curvature in the radius region, in order to achieve optimum detection of the defects and correct testing.

In the case of automated systems with or without a coupling agent flow length, this mechanical tracking of the probes is only possible with considerable outlay, for which reason these methods have hitherto only been used for testing round pipes, e.g. as rotation test rigs.

Therefore, for the purpose of testing elongate, angled hollow profiles there has hitherto not been a method which can be used cost-effectively and by means of which not only the planar regions in the profile limbs but also those of the inner and outer surface of the radius regions of the bent profile limbs can be tested in an automated manner in particular for longitudinal defects.

On the whole, the problem with the ultrasonic testing of elongate, angled hollow profiles is that, by using the methods known for round pipes, testing of the entire test body surface of elongate, angled hollow profiles which is cost-effective and at the same time has a greater level of quality assurance and can be automated is not possible or is possible only with very considerable outlay.

The patent publication document US 2011/138 919 A1 refers to a method for the non-destructive ultrasonic testing of a solid or hollow rod with 4, 6 or 8 edges and a respective number of flat surfaces at an angle to each other. The non-destructive ultrasonic testing uses several selectively activatable ultrasonic transducers. In order to achieve a more reliable and more comprehensive testing, certain ultrasonic transducers are selected and activated, so that the main propagation direction of an ultrasonic pulse produced by the selected and activated ultrasonic transducers is perpendicular to at least one of the flat surfaces of the rod.

Another patent publication document US 2015/168 355 A1 discloses a method for calibrating a phased array ultrasonic probe for inspecting girth welds of pipes. The calibration takes place with a calibration block having a series of artificial reflectors simulating defects. The reflectors are positioned in the area of a heat-affected zone of the intended girth weld. During the calibration values of an initial set of acoustic parameters are optimized to evolve a final set of acoustic parameters which the probe utilizes for testing actual pipes for weld defects.

The patent US 6 415 644 B1 refers to a universal calibration block of metal having curved and step sections, notches, holes and scribe lines working as artificial reflectors simulating defects. Due to the available different types of reflectors in one calibration block a calibration of ultrasonic transducers can take place by using just one calibration block.

In patent US 6 182 494 B1 an ultrasonic transducer position adjustment method is disclosed to compensate for initial ultrasonic beam alignment errors using a calibration body defining targets thereon.

Therefore, the object of the invention is to provide a method for the ultrasonic testing of elongate, angled hollow profiles, preferably consisting of metal, in which testing of test body outer and inner surfaces for defects, in particular longitudinal defects, including the radius regions, which has a greater level of quality assurance and can be automated in a cost-effective manner can be achieved by means of probes in a phased-array technique.

This object is achieved by a method comprising the features of claim 1. Advantageous embodiments of the invention are described in dependent claims 2 to 10.

In accordance with the invention, in the case of a method for the ultrasonic testing of angled hollow profiles consisting of a sound-conducting material, in particular consisting of metal, comprising an ultrasonic testing device, consisting of a probe having transducers arranged on a transducer ruler in a phase-array technique, wherein ultrasonic signals for detecting external and internal defects on the hollow profile are generated by the transducers and are coupled into the surface of the hollow profile, testing which has a greater level of quality assurance and can be automated in a cost-effective manner is achieved by virtue of the fact that for the purpose of detecting external and internal defects in a straight region and in radius regions of the hollow profile, the transducers are controlled in dependence upon their position with respect to the straight region and their position with respect to the radius regions of the hollow profile such that ultrasonic signals are generated having intromission angles adapted to the external and internal defects in the straight region and in the radius regions by the ultrasonic testing of the reference profile. Prior to the actual ultrasonic testing of the hollow profile, ultrasonic testing is performed on a reference profile onto which are machined reference defects; the relevant intromission angles of the associated transducers or groups of transducers to be activated are determined by detection of reference defects on the radius region which are arranged externally and internally in the radius region of the reference profile and the determined intromission angles are adopted in dependence upon the respective position of the transducer with respect to the straight region or the radius regions of the reference profile for testing the hollow profile. The determined intromission angles are determined so that echo signal reflected by a reference defect has high amplitude and is clearly distinguished from background noise signal.

In this case, the transducers or groups of transducers are advantageously activated individually in order to adjust the intromission angles. Provision is also advantageously made that the length of the transducer ruler is selected such that the probe is coupled by means of coupling agent to the entire width of the surface of the hollow profile to be tested comprising the straight region and the two radius regions. Alternatively, the length of the transducer ruler can be smaller than the entire width of the surface of the hollow profile, for example 100 mm when the entire width of the surface of the hollow profile is 400 mm, so that the entire surface of the hollow profile is tested in four sections at least.

Automatic or semi-automatic testing of the surface of the hollow profile both on the surfaces and also in the radii of the corner regions is possible with the invention without any problem.

In addition to internal and external defects, in particular longitudinal defects, laminar imperfections in the material, as well as wall thickness measurements, can also be carried out in one operation. Testing for transverse defects and oblique defects is likewise possible using an adapted probe which couples ultrasonic signals in corresponding directions into the surface of the hollow profile.

By means of the invention, a considerable reduction in the amount of work is achieved because many different intromission conditions can be achieved in one testing procedure in dependence upon position and adapted to the respective test object geometry.

Therefore, the core of the invention is that during ultrasonic testing for defects, in particular longitudinal defects, a different intromission angle is adjusted in each case for the internal defect and external defect testing and in particular in dependence upon the respective position of the individual transducer, in relation to the radius region to be tested.

In an advantageous manner, the distance of the respective transducer to the next bent profile edge is selected in this case as a reference plane for establishing the position, wherein a different intromission angle is adjusted in each case for the internal defect and external defect testing, in order to achieve optimum testing in the straight and radius regions.

If the probe array is guided along a reference plane, in particular the profile edge, by means of the device, specific transducers are influenced in dependence upon their position with respect to the profile edge by in each case different delays of the transmission pulse (Delay Laws), in order to permit optimum and correct testing of the profile in the straight regions but also in the radius regions in each case in a different manner for the inner surface and outer surface. In this case, the reference plane extends in parallel with the longitudinal axis of the hollow profile and at a right-angle with respect to the transducer ruler and intersects the beginning of an outer surface of a radius region to be tested.

The ultrasonic testing of, in particular, longitudinally directed internal defects in the radius region of e.g. rectangular hollow profiles is effected by suitably selecting intromission angles and corresponding elements of the probe array.

In this context, the term "suitably" means that the echo signal of the defect has an amplitude which is as high as possible and which is clearly distinguished from the background noise of the echo signal.

The location-dependent intromission angles of the individual transducers or groups of transducers for detecting internal and external defects is established in an advantageous manner on a previously ultrasonically tested reference profile, in which e.g. a linear array is arranged 90° with respect to the longitudinal axis of the hollow profile and is suitably positioned with the aid of a coupling device. In an advantageous manner, a longitudinal groove, arranged perpendicularly to the inner surface of the reference profile, in the radius region serves as a reference defect or reference reflector for the ultrasonic signals. These longitudinal grooves as reference defects are hard to detect during calibration. At the end this leads to a high measuring accuracy regarding usual defects appearing in hollow profiles which are easier to detect than the elected reference defects.

Instead of longitudinal grooves, which are introduced perpendicularly to the inner surface, as reference reflectors, it is also alternatively possible to arrange e.g. through-bores, flat base blind bores or grooves which are not introduced perpendicularly to the surface, should this be advantageous for establishing the location-dependent intromission angles of the individual transducers or groups of transducers.

Subsequently, intromission angles, which are suitable for testing for internal defects in the radius region, are selected in dependence upon the position of the individual transducers or the respective excited group of transducers. The selection takes place in such a manner that, taking into consideration the geometry of the sound impact point, intromission angles in the material can be achieved which are at an angle, which is optimum for reflection, for the purpose of detecting internal defects in the radius region. By selecting another intromission angle, corresponding testing of the external defects in the radius region can then likewise be achieved.

Therefore, complete testing of a hollow profile for longitudinally oriented internal defects and external defects in the straight regions and in the radius regions can be achieved over the complete profile cross-section and over the length of the hollow profile. Moreover, in the case of a perpendicular intromission of sound into the surface, wall thickness and laminar imperfection testing is likewise possible using the same array.

In one advantageous embodiment of the invention, the use of a multi-dimensional array, e.g. a 2-dimensional matrix array is provided for implementing oblique defect and transverse defect testing.

Holographic excitation of this array can contribute to the further optimization of the testing.

However, on account of physical aspects, only up to half of the ultrasonic signals of the transducers can reach the radius region, as otherwise the signals are no longer reflected by the internal corner of the hollow profile and therefore any possible defect signal from the radius region can no longer be detected.

Therefore, complete ultrasonic testing of the entire surface of the hollow profile and the automation thereof during a single testing procedure can be effected advantageously using a plurality of ultrasonic testing devices, which are arranged around the test object or around the hollow profile, and a hollow profile which can be moved relative thereto. Therefore, all of the straight and radius regions of the hollow profile are then ultrasonically tested at the same time in a single testing cycle.

The coupling agent used for the ultrasonic testing can be e.g. water, oil or emulsions. Specifically, in the case of test bodies consisting of steel, oil can advantageously be used as a coupling agent and at the same time as an anti-corrosion agent.

On the one hand, the lubricating effect of the oil makes it considerably easier to displace the probe on the test body surface and reduce the expenditure of effort required for this purpose and on the other hand, the test body surface is least temporarily protected against corrosion at the same time.

In a further advantageous embodiment of the invention, provision is made that for testing purposes the probe is arranged in a housing which is filled with coupling agent and is moved by means of a lateral guide in the direction of the longitudinal axis of the hollow profile over the surface at a fixed position of the transducers relative to the surface of the hollow profile.

In the case of this advantageous type of ultrasonic testing, the ultrasonic testing device consists of a housing which is filled with coupling agent and is mounted so as to be able to rotate about a probe arranged therein. The probe is spaced apart from the inner wall of the housing by a defined coupling agent flow length.

The position of the transducers is advantageously established by means of a rotatably mounted guide which is fixedly connected to the housing and rolls on the lateral surface of the hollow profile.

In order to test the hollow profile, the housing is moved in the direction of the longitudinal axis of the hollow profile relative to the surface thereof. On the one hand, the ultrasonic testing device can be moved over the hollow profile and on the other hand, however, the hollow profile can also be moved underneath the ultrasonic testing device.

The housing itself is mounted so as to be able to rotate about the probe and therefore the ultrasonic testing device can roll over the housing, which surrounds the liquid chamber, on the workpiece surface. In order to couple the housing to the surface of the test body, said surface is wetted in a known manner with coupling agent, such as e.g. with water.

The housing itself can consist e.g. of sound-conducting synthetic material.

In one advantageous development of the invention, provision is made that the housing is formed as a membrane which is permeable for coupling agent and the surface of the hollow profile is wetted during the ultrasonic testing. In this case, the housing must be provided with a connection in order to be able to feed coupling agent continuously to the housing.

Alternatively, the surface of the hollow profile can also be wetted in a separate operation prior to or at the beginning of the ultrasonic testing.

This device comprising an integrated coupling agent flow length has the advantage of a relatively simple and cost-effective structure and of simple handling. Moreover, the device can be used in a simple manner controlled by hand or controlled in a semi-automated or fully automated manner.

Although the device is preferably used for ultrasonic testing of metallic hollow profiles, e.g. consisting of steel, it is not limited thereto. It is also feasible to use this device e.g. for testing hollow profiles consisting of synthetic material or other non-metallic but sound-conducting materials.

Further features, advantages and details of the invention are apparent from the description hereinafter of an exemplified embodiment illustrated in the drawing, in which:
Figure 1 shows a schematic cross-sectional view of an ultrasonic testing device to practice the method in accordance with the invention,
Figure 2 shows a cross-sectional view of an angled reference profile comprising reference grooves,
Figure 3 shows a schematic view of a transducer ruler of the ultrasonic testing device shown in figure 1 with a hollow profile to be tested and
Figure 4 shows an enlarged view of a radius region of the hollow profile in figure 3.

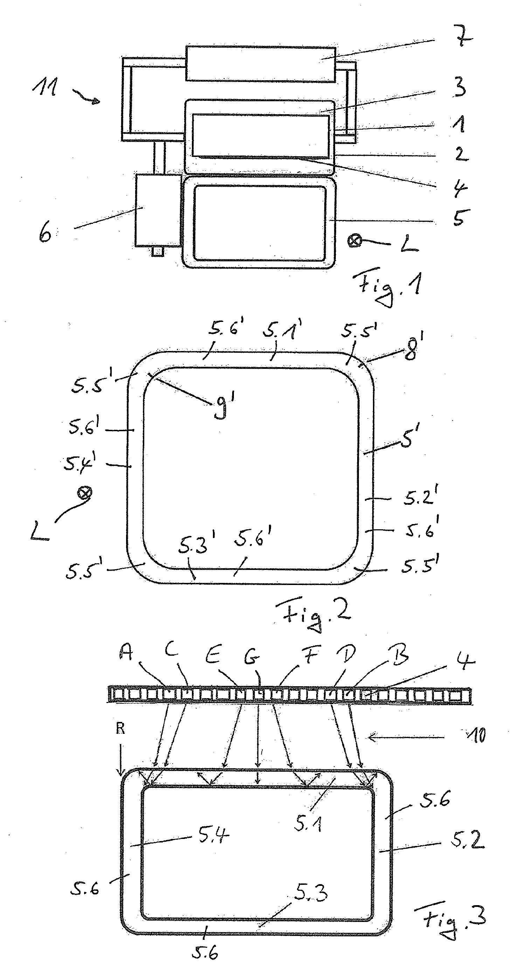

Figure 1 shows a schematic cross-sectional view of an ultrasonic testing device 11 for testing elongate and angled hollow profiles 5 comprising a rectangular cross-section for longitudinal defects. The ultrasonic testing device 11 consists of a probe 1, which is equipped with in this example thirty-two transducers A to G arranged in the manner of a ruler (see figure 3), in a phased-array technique. Typically, the probe 1 has a so-called transducer ruler 4, on which the transducers A to G are arranged. The transducers A to G are also called virtual probes since the transducers A to G each consist of one or more transducer elements. These transducer elements are controlled in order to generate ultrasonic signals 10 in a desired direction. The transducer ruler 4 is arranged in a housing 2 which forms a liquid chamber and is filled with a coupling agent 3. The length of the transducer ruler 4 is dimensioned corresponding to the length or width of a head part 5.1, a side part 5.2 or 5.4 or a base part 5.3 (see figure 3) of the hollow profile 5 which is to be tested. As usual the head part 5.1, the side parts 5.2, 5.4 and the base part 5.3 have roughly parallel inner and outer surfaces. The housing 2 of the ultrasonic testing device 11 is mounted so as to be able to rotate about the transducer ruler 4 which is mounted in a fixed position in the housing 2, so that the ultrasonic testing device 11 or its housing 2 can roll on a surface of the hollow profile 5 and therefore is in contact with the hollow profile 5. In this case, the liquid in the housing 2 and the wall of the housing 2 form a coupling agent flow length between the probe 1 and the hollow profile 5. The housing 2, in particular its wall, consists of sound-conducting synthetic material, in order to be able to couple the ultrasonic signals 10 transmitted by the probe 1 (see figure 3) into the hollow profile 5. In order to couple the housing 2 to the surface of the hollow profile 5, said surface is wetted in a known manner with coupling agent 3, such as e.g. water. The wetting with coupling agent 3 takes place in this case prior to or during the ultrasonic testing by means of a separate operating step in an automated manner or by hand.

The location of the transducers A to G in the ultrasonic testing device 11 relative to the surface of the hollow profile 5 to be tested is established by means of a guide roller 6. For this purpose, the guide roller 6 is mounted on the ultrasonic testing device 11 so as to be able to rotate about a vertical axis and, during the ultrasonic testing, rolls along the surface of the left-hand side part 5.4 of the hollow profile 5 in the direction of the longitudinal axis L of the hollow profile 5. As a result, the transducers A to G or groups of transducers A to G are oriented in terms of location in relation to the surface of the hollow profile 5 to be tested and can be guided for the ultrasonic testing in the direction of the longitudinal axis L of the hollow profile 5. The head part 5.1 of the hollow profile 5 to be tested and also the side parts 5.2 and 5.4 to be tested and the base part 5.3 in each case at the beginning and end consist of a radius region 5.5 and a straight region 5.6 arranged therebetween (see figure 2). Depending upon whether longitudinal defects are to be detected in the radius region 5.5, in the straight region 5.6 or also in the straight region 5.6 but actually in proximity to the radius region 5.5, the ultrasonic signals 10 are to be adapted accordingly in relation to their intromission angles and therefore the respectively locally associated transducers A to G. The adaptation is effected by electronic control of the transducers A to G and with the aid of a reference profile 5' or its dimensions of the radius regions 5.5 and the straight region 5.6 in the direction of the transducer ruler 4. The intromission angle is understood to be the angle which is formed by the direction of the ultrasonic signal 10 proceeding from the surface of the hollow profile 5 to be tested into the material of the hollow profile 5 to be tested and a vertical with respect to the surface of the hollow profile 5 to be tested. The respectively determined intromission angles are then stored for each hollow profile 5 and each side thereof to be tested and if required are used for configuring the intromission angles of the transducer ruler 4. By means of the previously respectively established intromission angles, internal and external defects in the planar straight regions 5.6 and the radius regions 5.5 can be detected in a targeted manner. Typically, the transducer ruler 4 comprises an elongate rectangular shape and is oriented with its longitudinal extension horizontally, in parallel with the surface of the hollow profile 5 to be tested and at a right angle with respect to a longitudinal axis L of the hollow profile 5. During the ultrasonic testing, the transducer ruler 4 is guided along the surface of the hollow profile 5 to be tested, in its longitudinal axis L. In this example, the ultrasonic testing device 11 is moved by hand over the hollow profile 5. For this purpose, the ultrasonic testing device 11 comprises a handle 7.

Figure 2 shows a schematic cross-sectional view of an angled and hollow reference profile 5' comprising reference defects formed as reference grooves. The reference grooves are each arranged in the radius region 5.5' of the hollow profile 5' and are formed as external defects 8', 9' on the inner and outer surface of the radius region 5.5' and in each case perpendicularly to the inner and outer surface of the radius region 5.5'. The reference grooves also extend in the direction of the longitudinal axis L of the hollow profile 5'. By means of ultrasonic testing of the reference profile 5' and thus of the reference grooves, the transducers A to G or groups of transducers A to G to be activated in each case and their respective intromission angles are then determined and stored for the dimensions of the reference profile 5', in particular the geometry thereof in the region of the radius region 5.5'. The determination takes place in such a manner that, taking into consideration the geometry of the sound impact point, intromission angles in the material of the hollow profile 5' can be achieved which are at an angle, which is optimum for reflection, for the purpose of detecting external defects in the radius region 5.5'. In relation to the ultrasonic signals 10, the reference grooves can also be defined as reference reflectors. As previously described, in this case the transducer ruler 4 is arranged with its longitudinal extension 90° to the longitudinal axis L of the hollow profile 5. Subsequently, intromission angles, which are suitable for testing the internal defect 9 in the radius region 5.5', are selected in dependence upon the position of the individual transducers or the respective excited group of transducers.

Figure 3 shows a schematic view of a transducer ruler 4 of the ultrasonic testing device 11 shown in figure 1 with a hollow profile 5 to be tested. For the sake of clarity, this view shows only the transducer ruler 4 without the housing 2. It is apparent that a multiplicity of transducers in a phased-array technique, of which some are designated by the letters A to G, are spaced apart along the transducer ruler 4 in its longitudinal direction and uniformly from one another. The transducers generate ultrasonic signals 10 which are directed to the hollow profile 5 to be tested. The hollow profile 5 to be tested is rectangular and comprises two side parts 5.2, 5.4, a head part 5.1 and a base part 5.3. In the present case, the head part 5.1 including half of the radius regions 5.5 adjoining the straight region 5.6 are initially examined for internal and external defects. The length of the transducer ruler 4 of the probe 1 is such that the head part 5.1 of the hollow profile 5 to be tested can be tested as far as to the radius region 5.5. Depending upon the location of the respective transducer, ultrasonic signals 10 comprising different intromission angles are coupled into the surface of the hollow profile 5. However, on account of physical aspects, in each case only up to half of the ultrasonic signals 10 of the transducers A, B, C and D can reach the two radius regions 5.5, as otherwise the ultrasonic signals 10 are no longer reflected by the internal corner of the hollow profile 5 and therefore any possible defect signal from the radius region 5.5 can no longer be detected. The internal and external defects located in the planar straight region 5.6 of the head part 5.1 are detected by means of the ultrasonic signals 10 of the transducers E and F. Of course, in addition to the transducers E and F, still further ones of the transducers are used in the planar straight region 5.6. For reasons of clarity, corresponding ultrasonic signals 10 have not been illustrated. In addition, in accordance with the invention laminar imperfection testing or wall thickness measurements are also conducted using the transducer G.

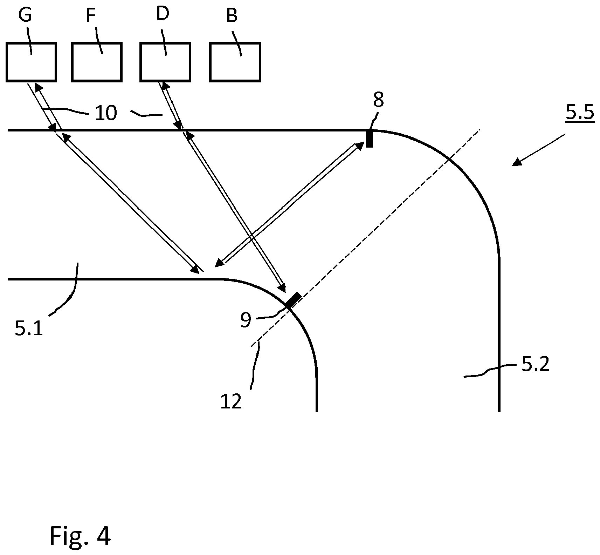

Figure 4 shows an enlarged view of the radius region 5.5' of the hollow profile 5. For calibration purposes one external defect in the outer radius region 8 and another external defect in the inner radius region 9 are placed in the hollow profile 5. The inventive transducers G, F, D and B are grouped together to so-called virtual probes generate ultrasonic signals 10 with intromission angles adapted to the detect external and internal defects in the first half of the radius region 5.5 being in front of a center line 12 of the radius region 5.5 seen in a direction of detecting. Accordingly, the transducers G, F, D and B can direct their ultrasonic signals 10 starting from the head part 5.1 of the hollow profile 5 into the radius region 5.5 of the hollow profile 5. The center line 12 of the radius region 5.5 defines a line where an ultrasonic signal 10 is just reflected backwards to the transducers A to G and is not diffracted within hollow profile 5. In the embodiment shown in figure 4 transducers G and F produce ultrasonic signals 10 that are reflected from external defects 8, 9 and detected by transducer G or F respectively. However, it is also possible that a neighboring transducer also detects the ultrasonic signals 10 so that transmitter and receiver can but must not be identical.

### List of reference signs

- 1: probe
- 2: housing
- 3: coupling agent
- 4: transducer ruler
- 5: hollow profile
- 5.1: head part of the hollow profile 5
- 5.2: side part of the hollow profile 5
- 5.3: base part of the hollow profile 5
- 5.4: side part of the hollow profile 5
- 5.5: radius region of the hollow profile 5
- 5.6: straight region of the hollow profile 5
- 5': reference profile
- 5.1': head part of the reference profile 5'
- 5.2': side part of the reference profile 5'
- 5.3': base part of the reference profile 5'
- 5.4': side part of the reference profile 5'
- 5.5': radius region of the reference profile 5'
- 5.6': straight region of the reference profile 5'
- 6: guide roller
- 7: handle
- 8: external defect in the outer radius region
- 9: external defect in the inner radius region
- 8': external reference defect in the outer radius region
- 9': external reference defect in the inner radius region
- 10: ultrasonic signals
- 11: ultrasonic testing device
- 12: center line of radius region
- A to G: transducers
- L: longitudinal axis
- R: reference plane

## Claims

1. Method for ultrasonic testing of hollow profiles (5) comprising in cross-section straight regions (5.6) and radius regions (5.5) in the transition between said straight regions (5.6), said hollow profiles (5) consisting of sound-conducting material, in particular consisting of metal, comprising an ultrasonic testing device (11), consisting of a probe (1) having transducers (A to G), which are arranged on a transducer ruler (4), in a phased-array technique, wherein ultrasonic signals (10) for detecting external and internal defects on the hollow profile (5) are generated by the transducers (A to G) and are coupled into the surface of the hollow profile (5), **characterized in that** prior to an actual ultrasonic testing of the hollow profile (5), ultrasonic testing is performed on a reference profile (5'), the relevant intromission angles of the associated transducers (A to G) or groups of transducers (A to G) to be activated are determined by detection of reference defects on the radius region (5.5') which are arranged externally and internally in the radius region (5.5') of the reference profile (5') and the determined intromission angles are adopted in dependence upon the respective position of the transducer (A to G) with respect to the straight region (5.6') or the radius regions (5.5') of the reference profile (5') for testing the hollow profile (5) and for the purpose of detecting external and internal defects in a straight region (5.6) and in radius regions (5.5) of the hollow profile (5), the transducers (A to G) are controlled in dependence upon their position with respect to the straight region (5.6) and their position with respect to the radius regions (5.5) of the hollow profile (5) such that ultrasonic signals (10) are generated having intromission angles adapted to the external and internal defects in the straight region (5.6) and in the radius regions (5.5) by the ultrasonic testing of the reference profile (5'), and such that intromission angles are adjusted in dependence upon the position of the individual transducers or the respective excited group of transducers, in relation to the radius regions to be tested.

2. Method as claimed in claim 1, wherein the respective position of the transducers (A to G) with respect to the straight region (5.6) or the radius region (5.5) to be activated in each case is related to a reference plane (R) which extends in parallel with a longitudinal axis (L) of the hollow profile (5) and at a right angle with respect to the transducer ruler (4) and which intersects a beginning of an outer surface of a radius region (5) to be tested.

3. Method as claimed in claim 1 or 2, wherein external and internal defects are longitudinal defects directed in relation to a longitudinal axis (L) of the hollow profile (5) are detected.

4. Method as claimed in any one of claims 1 to 2, wherein external and internal defects are transversely or obliquely directed and the probe (1) is an adapted probe which couples ultrasonic signals in directions corresponding to transverse defects and oblique defects into the surface of the hollow profile so as external and internal defects which are transversely or obliquely directed in relation to a longitudinal axis (L) of the hollow profile (5) are detected.

5. Method as claimed in any one of claims 1 to 4, wherein the entire surface of the hollow profile (5) is tested in one testing cycle by means of an ultrasonic testing device (11) which can be moved in a longitudinal axis (L) of the hollow profile (5).

6. Method as claimed in any one of claims 1 to 5, wherein the ultrasonic testing device (11) comprises a housing (2) which is filled with coupling agent (3) and is mounted so as to be able to rotate about a probe (1) arranged therein, wherein the probe (1) is spaced apart from the inner wall of the housing (2), wherein the housing (2) is moved by means of a rotatably mounted lateral guide (6), which rolls on the lateral surface of the hollow profile (2), in the direction of a longitudinal axis (L) of the hollow profile (5) over the surface at a fixed position of the transducers (A to G) relative to the surface of the hollow profile (5) and the housing (2) is coupled to the hollow profile (5) by wetting the surface with a coupling agent (3).

7. Method as claimed in any one of claims 1 to 6, wherein the ultrasonic testing is conducted by hand, in a semi-automated manner or fully automated manner.

8. Method as claimed in any one of claims 1 to 7, wherein through-bores or flat base blind bores or grooves are introduced as reference defects into the radius region (5.5') of the reference profile (5') perpendicularly or at an angle thereto.

9. Method as claimed in any one of claims 1 to 8, wherein the transducers (A-G) or groups of transducers (A-G) are activated individually in order to adjust the intromission angles.

10. Method as claimed in any one of claims 1 to 9, wherein the length of the transducer ruler (4) is selected such that the probe (1) is coupled by means of coupling agent (3) to the entire width of the surface of the hollow profile (5), which is to be tested, comprising the straight region (5.6) and the two radius regions (5.5).

## Patentansprüche

1. Verfahren zur Ultraschallprüfung von Hohlprofilen (5), umfassend im Querschnitt gesehen Geradbereiche (5.6) und Radiusbereiche (5.5) im Übergang zwischen den Geradbereichen (5.6), wobei die Hohlprofile (5) aus schallleitendem Material, insbesondere aus Metall, bestehen, umfassend eine Ultraschallprüfvorrichtung (11), bestehend aus einem Prüfkopf (1) mit an einem Schwingerlineal (4) angeordneten Schwingerelementen (A bis G) in Phased-Array-Technik, wobei von den Schwingerelementen (A bis G) Ultraschallsignale (10) zur Detektion von Außen- und Innenfehlern des Hohlprofils (5) erzeugt werden und in die Oberfläche des Hohlprofils (5) eingekoppelt werden, **dadurch gekennzeichnet, dass** vor einer eigentlichen Ultraschallprüfung des Hohlprofils (5) eine Ultraschallprüfung an einem Referenzprofil (5') vorgenommen wird, die relevanten Einschallwinkel der zugehörigen anzusteuernden Schwingerelemente (A bis G) oder Gruppen von Schwingerelementen (A bis G) über eine Detektion von im Radiusbereich (5.5) des Referenzprofils (5') außen und innen angeordnete Referenzfehler am Radiusbereich (5.5) ermittelt werden und die ermittelten Einschallwinkel in Abhängigkeit von der jeweiligen Position des Schwingerelementes (A bis G) zu dem Geradbereich (5.6) oder den Radiusbereichen (5.5) des Referenzprofils (5') zur Prüfung des Hohlprofils (5) übernommen werden und für die Detektion von Außen- und Innenfehlern in einem Geradbereich (5.6) und in Radiusbereichen (5.5) des Hohlprofils (5) die Schwingerelemente (A bis G) in Abhängigkeit ihrer Position zu dem Geradbereich (5.6) und ihrer Position zu den Radiusbereichen (5.5) des Hohlprofils (5) derart eingestellt werden, dass Ultraschallsignale (10) mit an die Außen- und Innenfehler in dem Geradbereich (5.6) und in den Radiusbereichen (5.5) durch die Ultraschallprüfung des Referenzprofils (5') angepassten Einschallwinkel erzeugt werden und so dass die Einschallwinkel in Abhängigkeit von der Position des einzelnen Schwingerelements oder der entsprechend angesteuerten Gruppe von Schwingerelementen angepasst werden in Bezug auf den zu prüfenden Radiusbereich.

2. Verfahren nach Anspruch 1, wobei die entsprechende Position der jeweils anzusteuernden Schwingerelemente (A bis G) mit Bezug zu dem Geradbereich (5.6) oder den Radiusbereichen (5.5) auf eine Bezugsebene (R) bezogen wird, die parallel zur Längsachse (L) des Hohlprofils (5) und rechtwinklig zu dem Schwingerlineal (4) verläuft und welche einen Anfang einer äußeren Oberfläche eines zu prüfenden Radiusbereichs (5.5) schneidet.

3. Verfahren nach Anspruch 1 oder 2, wobei Außen- und Innenfehler detektiert werden, die in Bezug zur Längsachse (L) des Hohlprofils (5) ausgerichtete Längsfehler sind.

4. Verfahren nach einem der Ansprüche 1 bis 2, wobei die Außen- und Innenfehler quer oder schräg ausgerichtet sind und der Prüfkopf (1) ein angepasster Prüfkopf ist, welcher Ultraschallsignale (10) in Richtungen korrespondierend mit Querfehlern und Schrägfehlern in die Oberfläche des Hohlprofils (5) einkoppelt, so dass in Bezug zur Längsachse (L) des Hohlprofils (5) quer- oder schräg gerichtete Außen- und Innenfehler detektiert werden.

5. Verfahren nach einem der Ansprüche 1 bis 4, wobei die gesamte Oberfläche des Hohlprofils (5) mittels einer in Längsachse (L) des Hohlprofils (5) verfahrbaren Ultraschallprüfvorrichtung (11) in einem Prüfzyklus geprüft wird.

6. Verfahren nach einem der Ansprüche 1 bis 5, wobei die Ultraschallprüfvorrichtung (11) ein Gehäuse (2) umfasst, welches mit Koppelmittel (3) gefüllt ist und so befestigt ist, umdrehbar um einen darin angeordneten Prüfkopf (1) zu sein, wobei der Prüfkopf (1) zur Innenwand des Gehäuses (2) beabstandet ist, wobei das Gehäuse (2) mittels einer drehbar gelagerten seitlichen Führung (6) bewegt wird, welche auf der seitlichen Oberfläche des Hohlprofils (2) in Richtung der Längsachse des Hohlprofils (5) über die Oberfläche mit einer festen Position der Schwingerelemente (A bis G) relativ zur Oberfläche des Hohlprofils (5) abrollt und die Ankopplung des Gehäuses (2) an das Hohlprofil (5) über eine Benetzung der Oberfläche mittels eines Koppelmittels (3) erfolgt.

7. Verfahren nach einem der Ansprüche 1 bis 6, wobei die Ultraschallprüfung von Hand, halbautomatisiert oder voll automatisiert durchgeführt wird.

8. Verfahren nach einem der Ansprüche 1 bis 7, wobei als Referenzfehler in den Radiusbereich (5.5) des Hohlprofils (5) Durchgangsbohrungen oder Flachbodensacklochbohrungen oder Nuten senkrecht oder in einem Winkel dazu eingebracht werden.

9. Verfahren nach einem der Ansprüche 1 bis 8, wobei die Schwingerelemente (A - G) oder Gruppen von Schwingerelementen (A - G) zur Einstellung der Einschallwinkel einzeln angesteuert werden.

10. Verfahren nach einem der Ansprüche 1 bis 9, wobei die Länge des Schwingerlineals (4) so gewählt wird, dass der Prüfkopf (1) mittels Koppelmittel (3) an die gesamte Breite der zu prüfenden Oberfläche des Hohlprofils (5) umfassend den Geradbereich (5.6) und die beiden Radiusbereiche (5.5) angekoppelt wird.

## Revendications

1. Procédé de contrôle par ultrasons de profilés creux (5) comprenant en section transversale des régions droites (5.6) et des régions radiales (5.5) dans la transition entre lesdites régions droites (5.6), lesdits profilés creux (5) étant constitués de matériaux conducteurs du son, en particulier métallique, comprenant un dispositif de contrôle par ultrasons (11), constitué d'une sonde (1) comportant des transducteurs (A à G), qui sont disposés sur une règle de transducteur (4), selon une technique multiéléments, dans lequel des signaux ultrasonores (10) pour détecter des défauts externes et internes sur le profilé creux (5) sont générés par les transducteurs (A à G) et sont couplés à la surface du profilé creux (5), **caractérisé en ce qu'**avant un échantillonnage réel contrôle par ultrasons du profil creux (5), le contrôle par ultrasons est effectué sur un profil de référence (5'), les angles d'intromission pertinents des transducteurs associés (A à G) ou des groupes de transducteurs (A à G) à activer sont déterminés par détection de défauts de référence sur la zone de rayon (5,5') qui sont disposés à l'extérieur et à l'intérieur de la zone de rayon (5,5') du profil de référence (5') et les angles d'intromission déterminés sont adoptés en fonction de la position respective du transducteur (A à G) par rapport à la région droite (5.6') ou aux régions radiales (5.5') du profil de référence (5') pour tester le profil creux (5) et dans le but de détecter des défauts externes et internes dans une zone droite (5.6) et dans des zones radiales (5.5) du profil creux (5), les transducteurs (A à G) sont commandés en fonction de leur position par rapport à la zone droite (5.6) et de leur position par rapport aux zones de rayon (5.5) du profilé creux (5) de telle sorte que des signaux ultrasonores (10) sont générés avec des angles d'intromission adaptés aux défauts externes et internes dans la zone droite (5.6) et dans les zones de rayon (5.5) par le contrôle par ultrasons du profil de référence (5'), et de telle sorte que les angles d'intromission sont ajustés en fonction de la position des transducteurs individuels ou du groupe de transducteurs excités respectif, par rapport aux régions de rayon devant être testées.

2. Procédé selon la revendication 1, dans lequel la position respective des transducteurs (A à G) par rapport à la région droite (5.6) ou à la région radiale (5.5) à activer dans chaque cas est rapportée à un plan de référence (R) qui s'étend parallèlement à un axe longitudinal (L) du profil creux (5) et à angle droit par rapport à la règle de transducteur (4) et qui coupe le début d'une surface extérieure d'une région de rayon (5) devant être testée.

3. Procédé selon la revendication 1 ou 2, dans lequel les défauts externes et internes détectés sont des défauts longitudinaux dirigés par rapport à un axe longitudinal (L) du profilé creux (5).

4. Procédé selon l'une quelconque des revendications 1 à 2, dans lequel les défauts externes et internes détectés sont dirigés transversalement ou obliquement et la sonde (1) est une sonde adaptée qui couple des signaux ultrasonores dans des directions correspondant aux défauts transversaux et aux défauts obliques dans la surface du profilé creux de manière à détecter des défauts externes et internes dirigés transversalement ou obliquement par rapport à un axe longitudinal (L) du profilé creux (5).

5. Procédé selon l'une quelconque des revendications 1 à 4, dans lequel toute la surface du profilé creux (5) est testée en un cycle de test au moyen d'un dispositif de contrôle à ultrasons (11) qui peut être déplacé dans un axe longitudinal (L) du profilé creux (5).

6. Procédé selon l'une quelconque des revendications 1 à 5, dans lequel le dispositif de contrôle par ultrasons (11) comprend un boîtier (2) rempli d'agent de couplage (3) et monté rotatif autour d'une sonde (1) disposé à l'intérieur, dans lequel la sonde (1) est espacée de la paroi intérieure du boîtier (2), dans lequel le boîtier (2) est déplacé au moyen d'un guide latéral (6) monté rotatif, qui roule sur le surface latérale du profilé creux (2), dans la direction d'un axe longitudinal (L) du profilé creux (5) sur la surface à une position fixe des transducteurs (A à G) par rapport à la surface du profilé creux (5) et le boîtier (2) est couplé au profilé creux (5) en mouillant la surface avec un agent de couplage (3).

7. Procédé selon l'une quelconque des revendications 1 à 6, dans lequel le test par ultrasons est effectué manuellement, de manière semi-automatique ou entièrement automatisée.

8. Procédé selon l'une quelconque des revendications 1 à 7, dans lequel des alésages traversants ou des alésages borgnes à base plate ou des rainures sont introduits comme défauts de référence dans la région du rayon (5.5') du profil de référence (5') perpendiculairement ou angulairement avec celui-ci.

9. Procédé selon l'une quelconque des revendications 1 à 8, dans lequel les transducteurs (A-G) ou groupes de transducteurs (A-G) sont activés individuellement afin d'ajuster les angles d'intromission.

10. Procédé selon l'une quelconque des revendications 1 à 9, dans lequel la longueur de la règle du transducteur (4) est choisie de manière à ce que la sonde (1) soit couplée au moyen de l'agent de couplage (3) à toute la largeur de la surface du profilé creux (5), qui doit être testée, comprenant la zone droite (5.6) et les deux zones de rayon (5.5).
